## Europäisches Patentamt
## European Patent Office
## Office européen des brevets

(19)

(11) Veröffentlichungsnummer: **0 122 298**
**B1**

(12)

# EUROPÄISCHE PATENTSCHRIFT

(45) Veröffentlichungstag der Patentschrift:
01.07.87

(51) Int. Cl.⁴: **B 41 J 3/20,** G 01 D 15/22

(21) Anmeldenummer: **83103292.5**

(22) Anmeldetag: **05.04.83**

(54) **Vorrichtung für ein prellfreies Aufsetzen eines Druckkopfes.**

(43) Veröffentlichungstag der Anmeldung:
**24.10.84 Patentblatt 84/43**

(45) Bekanntmachung des Hinweises auf die Patenterteilung:
**01.07.87 Patentblatt 87/27**

(84) Benannte Vertragsstaaten:
**CH DE FR GB IT LI NL**

(56) Entgegenhaltungen:
**FR-A-2 078 538**
**US-A-3 845 850**
**US-A-4 225 251**

(73) Patentinhaber: **IBM DEUTSCHLAND GMBH, Pascalstrasse 100, D-7000 Stuttgart 80 (DE)**
(84) Benannte Vertragsstaaten: **DE**

(73) Patentinhaber: **International Business Machines Corporation, Old Orchard Road, Armonk, N.Y. 10504 (US)**
(84) Benannte Vertragsstaaten: **CH FR GB IT LI NL**

(72) Erfinder: **Goldrian, Gottfried, Dipl.- Ing., Gutachter Weg 18, D-7030 Böblingen (DE)**
Erfinder: **Nitschke, Manfred, Franz- Schubert- Strasse 38, D-7033 Herrenberg (DE)**
Erfinder: **Rudolph, Volker, Dr., Finkenweg 20, D-7031 Aidlingen (DE)**
Erfinder: **Wohnsdorf, Manfred, Genkerstrasse 9, D-7030 Böblingen (DE)**

(74) Vertreter: **Blutke, Klaus, Dipl.- Ing., Schönaicher Strasse 220, D-7030 Böblingen (DE)**

## Beschreibung

Die Erfindung betrifft eine Vorrichtung für ein prellfreies Absenken und Aufsetzen eines Druckkopfes auf einen über eine Andruckplatte geführten Aufzeichnungsträger.

Ein Druckkopf kann beispielsweise durch eine Feder vom Aufzeichnungsträger abgehoben werden und über die Betätigung eines Elektromagneten auf den Aufzeichnungsträger aufgesetzt werden. Andererseits ist es auch möglich, den Aufzeichnungsträger durch einen Elektromagneten abgehoben zu halten und nach Abschalten des Elektromagneten mit Hilfe einer Federvorrichtung auf den Aufzeichnungsträger aufzusetzen. Gemäß der Europäischen Patentanmeldung EP-A-0 096 085 ist auch bereits eine Anordnung vorgeschlagen worden, die zwei unterschiedlich stark vorgespannte Federn oder Federvorrichtungen verwendet, wobei die schwächere der beiden Federvorrichtungen den Druckkopf anhebt, während die stärkere der beiden Federvorrichtungen über eine Sperre unwirksam gemacht ist. Wenn man beispielsweise mit Hilfe eines Auslöse-Elektromagneten die Sperre aufhebt, dann wird der Druckkopf durch die stärkere Feder, die die Kraft der schwächeren Feder überwindet, sanft aufgesetzt. Ganz allgemein ist also zu sagen, daß bei Druckern mit einem Druckkopf dieser im Regelfall in definierter Schreibposition gehalten und geführt ist und beim Zeilenrücklauf des Druckwagens oder beim Ende des Druckvorganges abgehoben wird. Beim Aufsetzen des Druckkopfes auf die Druckzeile vor Schreibbeginn wird notwendigerweise kinetische Energie frei, die entweder durch eine elastische Lagerung des Aufzeichungsträgers zumindest teilweise aufgefangen wird oder aber bei einem festen Widerlager ein Prellen bedingt. Selbst bei komplizierten Dämpfungsvorrichtungen ist dieser Vorgang wegen des notwendigen Bremsweges und wegen der Schwingneigung der Dämpfvorrichtung schwer zu meistern.

In der US-A-3 845 850 ist eine hebelförmige Andrückvorrichtung für einen Druckkopf beschrieben. Der Druckkopf ist Teil dieser Vorrichtung, die während des gesamten Schreibvorganges wirkt. Dabei wird der Druckkopf 110 um eine Kippachse 100 eines schwenkbaren Kipphebels 106 auf den Aufzeichnungsträger angedrückt; der Kipphebel wird durch eine Nocke 122, 124 bei der Druckwagenbewegung entsprechend gesteuert.

Der Erfindung liegt die Aufgabe zugrunde, eine Vorrichtung mit einem derartigen Kipphebel so auszugestalten, daß der Druck- oder Schreibkopf prellfrei auf die Druckzeile aufgesetzt werden kann, d.h. daß der beim Absenken des Druckkopfes auf die Druckzeile auftretende das Prellen bedingende Impuls unwirksam gemacht wird.

Diese Aufgabe der Erfindung wird in vorteilhafter Weise durch die im kennzeichnenden Teil des Anspruches 1 angegebenen Maßnahmen gelöst. Dabei handelt es sich um eine Art "Stapellauf-Rampe" für den Druckkopf, die während des Schreibvorganges nicht mehr auf diesen einwirkt.

Vorteilhafte Weiterbildungen der Erfindung sind in den Unteransprüchen beschrieben.

Die Erfindung wird anhand eines Ausführungsbeispiels in Verbindung mit den beigefügten Zeichnungen im einzelnen näher erläutert.

In den Zeichnungen zeigt:

Fig. 1 rein schematisch die neue Vorrichtung bei abgehobenem Druckkopf,

Fig. 2 rein schematisch die neue Vorrichtung mit auf dem Aufzeichnungsträger aufgesetztem Druckkopf,

Fig. 3 im einzelnen schematisch die Kompensationsvorrichtung im unbelasteten und

Fig. 4 im belasteten Zustand,

Fig. 5 bis 8 zeigen Diagramme zur Erläuterung der dynamischen Verhältnisse beim im wesentlichen prellfreien Aufsetzen eines Druckkopfes Insbesondere zeigen:

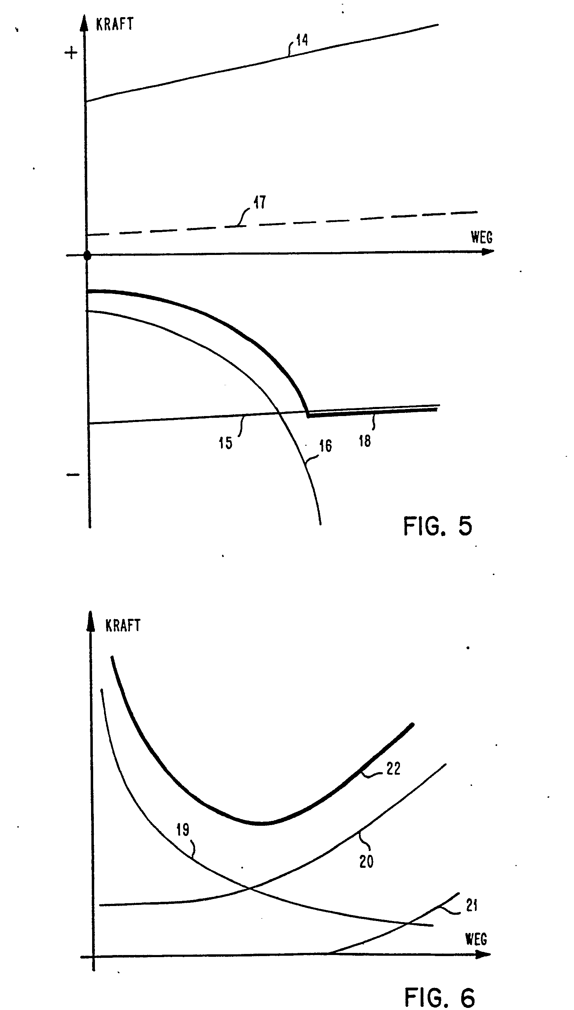

Fig. 5 die bei dem bereits vorgeschlagenen System am Druckkopf wirksamen Kräfte

Fig. 6 die bei einer erfindungsgemäßen Anordnung an der Rampe wirksamen Kräfte,

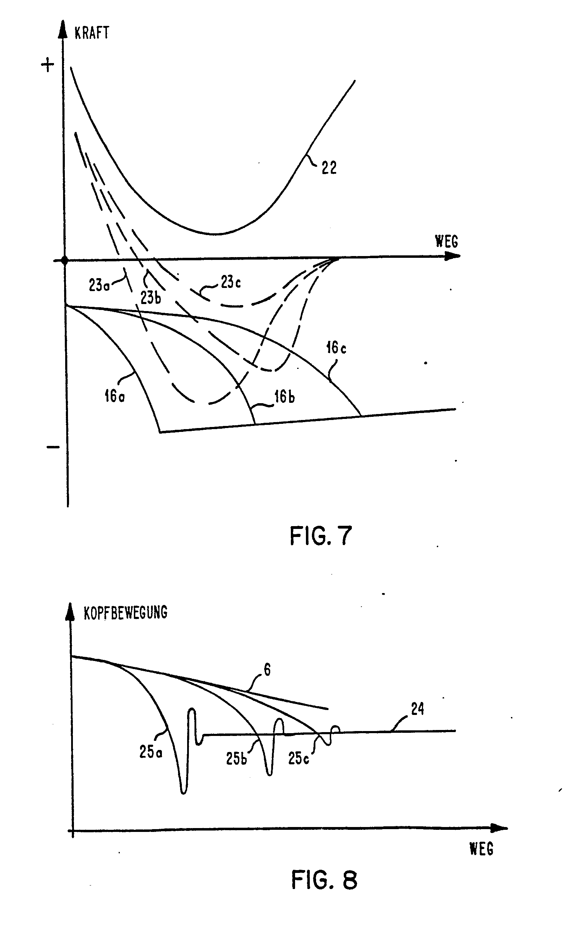

Fig. 7 die resultierenden Kräfte unter Einfluß verschiedener Ansprechkurven des Auslösemagneten und

Fig. 8 die Bewegung des Druckkopfes beim Aufsetzen auf die Rampe bis zum Erreichen des Schreibniveaus.

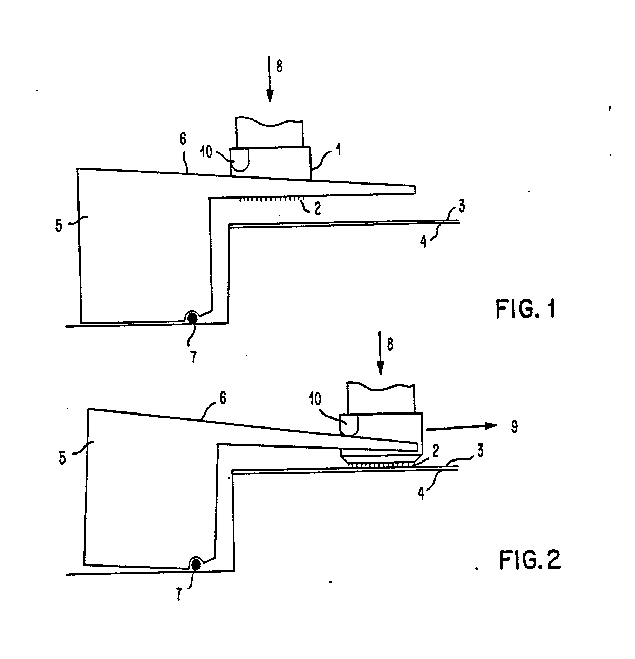

Fig. 1 zeigt rein schematisch einen Druckkopf 1, der beispielsweise in einem Elektroerosionsdrucker eingesetzt werden soll, mit seinen Druckelektroden 2. Selbstverständlich ist die neue Vorrichtung für jeden Druckkopf denkbar, der prellfrei auf einen Aufzeichnungsträger aufgesetzt werden soll. Ein Aufzeichnungsträger 3 ist ebenfalls rein schematisch auf einer Andruckplatte 4 gezeigt. Diese Andruckplatte kann beispielsweise auch eine Schreibwalze sein und weist eine elastische Oberfläche auf. Auf dem Wagen oder Schlitten, mit dem der Druckkopf längs einer Druckzeile verfahren wird, ist ein kippbarer Hebel 5 vorgesehen, der eine nach Art einer schiefen Ebene ausgestaltete Gleitfläche oder Rampe 6 aufweist. Dieser Hebel 5 ist dabei um ein Kipplager 7 kippbar.

Die den Schreibkopf in Richtung auf die Rampe und den Aufzeichnungsträger bewegenden Kräfte sind durch einen Pfeil 8 in senkrechter und einem Pfeil 9 in waagrechter Richtung angedeutet. Die Kraft 8 wird beispielsweise durch eine entsprechend vorgespannte Feder aufgebracht. Die Kraft 9 ergibt sich aus der Bewegung des Druckkopfes in Druckrichtung.

Der Druckkopf bewegt sich nach Betätigung des Auslösemagneten zunächst in senkrechter Richtung nach unten, bis er auf der Rampe 6 auftrifft. An der Seite des Druckkopfes ist ein Gleitschuh 10 angebracht, der auf der eine schiefe Ebene darstellenden Rampe 6 zu gleiten vermag. Der Gleitschuh ist dabei so hoch angesetzt, daß in der tiefsten Stellung des Hebels 5 die Schreibelektroden 2 auf dem Aufzeichnungsträger 3 satt mit leichtem Druck aufliegen.

Die bei dem Aufsetzvorgang des Druckkopfes auf der Rampe auftretende überschüssige kinetische Energie soll mit Hilfe des Hebels 5 unwirksam gemacht werden.

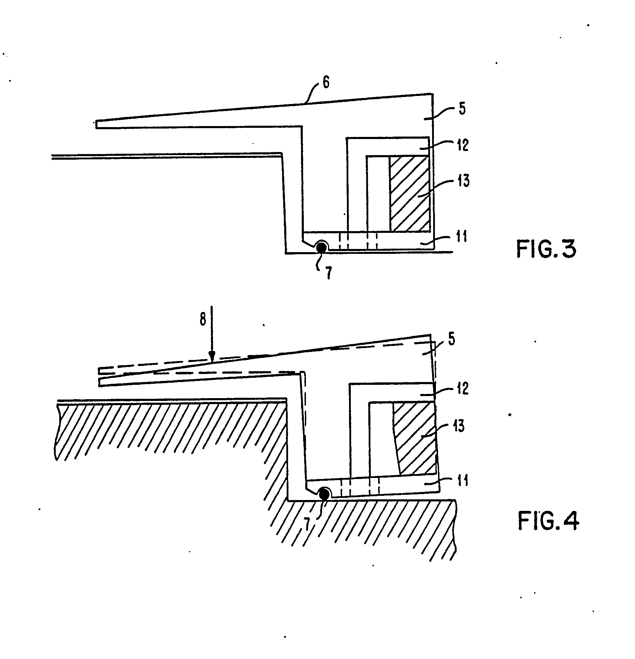

Wie man aus Fig. 3 erkennt, weist der Hebel 5 einen Hebelarm 11 auf. Außerdem ist ein hier in Form eines Winkelstücks ausgebildetes Widerlager 12 vorgesehen, das auf dem den Druckkopf tragenden Wagen selbst befestigt ist. Zwischen dem Hebelarm 11 und dem Widerlager 12 ist ein federndes oder elastisches Element 13 vorgesehen. Vorzugsweise weist dieses elastische Element 13 eine progressiv nichtlinear ansteigende Charakteristik auf. Im unbetätigten Zustand liegt der Druckkopf oberhalb des Hebels 5. Beim Absenken des Druckkopfes setzt der Gleitschuh 10 erstmals auf die Rampe 6 des Hebels 5 auf. Der Hebel 5 sitzt dabei immer noch auf seiner Unterlage auf, die als Anschlag für seine Ruhestellung dient. Bei einer Absenkbewegung des Druckkopfes in Richtung der Pfeile 8 und 9 wird der Hebel 5 gekippt, während gleichzeitig das elastische Element 13 zusammengedrückt wird. Dieses System hat in der Tat die geforderten Eigenschaften, d.h. der Druckkopf setzt nunmehr prellfrei auf der Rampe und anschließend ebenso sanft in Schreibposition auf. Während des Aufsetzvorganges können keine Schwingungen entstehen, da Feder und Masse des Hebels sich so bestimmen lassen, daß deren Schwingungszeit größer ist als die Zeit, die zum Absenken des Druckkopfes in Schreibposition benötigt wird. Der beim Absenken auf die Rampe auftretende überaus kritische Impuls des Druckkopfes wird in einen Drehimpuls in dem Hebel umgewandelt und gedämpft. Der Druckkopf setzt damit weich auf der Rampe auf.

In dem in der Europäischen Patentanmeldung 82 104 903.8 offenbarten System treten verschiedene Kräfte auf, die in ihrem Zusammenspiel bei der erfindungsgemäßen Weiterentwicklung berücksichtigt werden mußten, um zu optimalen Ergebnissen zu kommen. Diese dynamisch wirkenden Kräfte sollen hier allerdings rein qualitativ betrachtet werden, was genügen sollte, um das der Erfindung zugrundeliegende Prinzip klar herauszuarbeiten.

Die Rückholfeder-Kennlinie 14 in Fig. 5 zeigt den Verlauf der Kraft über den Weg im Ruhezustand. Zum Einleiter Abwärtsbewegung des Druckkopfes wird der die Sperre aufhebende Auslösemagnet, der hier nicht gezeigt ist, betätigt. Die den Andruck des Druckkopfes bewirkende Federkraft ist dann bei 15 gezeigt. Der Verlauf der am Anker des Auslösemagneten angreifenden Kraft ist schematisch bei 16 angedeutet. Man sieht sofort, daß mit abnehmendem Luftspalt diese Kraft rasch zunimmt. Die dann resultierende Federkraft ist bei 17 gezeigt und die Gesamtresultierende bei 18. Wenn man den Druckkopf bei seiner Abwärtsbewegung auf einer Rampe aufsetzen läßt und wenn man das Dämpfungselement 13 einsetzt und dann noch die Elastizität der Andruckplatte berücksichtigt, dann erhält man die in Fig. 6 gezeigten Verhältnisse. Der Verlauf der am Kipphebel wirksamen Kraft ist bei 19 gezeigt. Diese Kraft nimmt über den Weg nichtlinear ab. Die von dem Dämpfungselement 13 aufgebrachte nichtlineare progressiv ansteigende Kraft ist bei 20, die von der Andruckplatte vermittelte Kraft bei 21 und die daraus resultierende an der Rampe 6 angreifende Kraft bei 22 gezeigt.

Fig. 7 zeigt dann den Einfluß verschiedener Ansprechkennlinien des Auslösemagneten auf die resultierende Kraft. Drei verschiedene Ansprechkennlinien 16a, 16b und 16c führen zu drei immer weicher sich anschmiegenden Resultierenden 23a, 23b und 23c. Die Wirkung dieser Kräfte auf die Kopfbewegung beim Aufsetzen des Druckkopfes auf die Rampe 6 bis zum Erreichen des Schreibniveaus 24 ist dann aus den Kurven 25a, 25b und 25c in Fig. 8 klar ersichtlicht. Das heißt aber mit anderen Worten, daß bei entsprechender Wahl des Magnetfeldes des Auslösemagneten derart, daß der Magnetkreis nur bei einem kleinen Luftspalt geschlossen werden kann, wenn gleichzeitig der Druckkopf mit seinem Gleitschuh 10 auf der eine schiefe Ebene darstellenden Rampe 6 abwärts zu gleiten vermag, daß man ein besonders weiches und sanftes Schließen des Magnetkreises erreichen kann. Bei der neuen Konstruktion wird der Luftspalt des Magnetkreises des Auslösemagneten für den Druckkopf und mit Hilfe der eine schiefe Ebene darstellenden Rampe 6 des Hebels 5 langsam geschlossen. Außerdem erhält man einen exakt definierbaren Zeitpunkt, zu dem der Druckkopf aus der langsamen Absenkbewegung in eine schnellere Absenkbewegung bis auf das Schreibniveau 25 übergeht.

Befindet sich der Druckkopf in dem drehbaren Teil des Hebels 5, so ist die Zeit bis zum Beginn des schnellen Absenkens durch die Hebelgeometrie, die Federkraft des Druckkopfes und die Federvorspannung des elastischen Gliedes definiert. Ebenso ist die Absenkstrecke und die Absenkhöhe durch die Hebelgeometrie, die Federkraft, mit der der Druckkopf angedrückt wird und durch die Federkonstante des elastischen Elementes bestimmt. Daraus ergibt sich, daß diese Vorrichtung zum prellfreien Absenken eines Druckkopfes auf einen Aufzeichnungsträger vom Abstand zwischen dem Druckkopf und dem Aufzeichnungsträger unabhängig ist. Im Betriebsbereich ist also diese Vorrichtung zum prellfreien Absenken eines Druckkopfes nur von der Geometrie des Hebels und von den Kräften, die an den beiden Enden des Hebels angreifen, abhängig und daher von einer Höhenbewegung der Andruckplatte oder Schreibwalze, die die Lage des Aufzeichnungsträgers bestimmt, unabhängig.

Durch die Erfindung wurde also erreicht, daß nunmehr ein ganz genau gesteuertes, gezieltes und prellfreies Aufsetzen eines Druckkopfes auf einen Aufzeichnungsträger mit gut definiertem Aufsetzdruck erreicht worden ist.

## Patentansprüche

1. Vorrichtung für ein prellfreies Absenken und Aufsetzen eines Druckkopfes auf einen über eine Andruckplatte (4) geführten Aufzeichnungsträger (3) für eine zeilenweise Informationsaufzeichnung, mit einem um eine Kippachse (7) schwenkbaren Kipphebel (5), dadurch gekennzeichnet, daß dieser Kipphebel (5) in Druckzeilenrichtung weisend vor Beginn der Druckzeile angeordnet ist und mit seiner Kippachse (7), die sich quer zur Druckzeilenrichtung erstreckt, in Richtung auf den Aufzeichnungsträger (3) schwenkbar ist, wobei der Kipphebel (5) zusätzlich an seiner Oberseite eine in Druckzeilenrichtung abfallende, eine schiefe Ebene darstellende Rampe (6) aufweist, daß der Druckkopf (1) an mindestens einer Seitenfläche einen Gleitschuh (10) besitzt, mit dem der auf dem Kipphebel (5) aufgesetzte Druckkopf (1) bei gleichzeitiger Kippbewegung dieses Hebels entlang der Rampe (6) gleitet, bis er auf die Druckzeile aufsetzt, und daß zwischen einem feststehenden Widerlager (12) und einem Arm (11) des Kipphebels (5) ein elastisch verformbares Element (13) eingespannt ist, welches die Kippbewegung des Kipphebels zum Aufzeichnungsträger (3) hin dämpft.

2. Vorrichtung nach Anspruch 1, dadurch gekennzeichnet, daß die Ansprechcharakteristik eines das Absenken und Aufsetzen des Druckkopfes (1) auf die Rampe (6) einleitenden Auslösemagneten so gewählt ist, daß sich der Luftspalt des Magnetkreises des Auslösemagneten weich schließt.

3. Vorrichtung nach Anspruch 1, dadurch gekennzeichnet, daß das elastische Element (13) eine monoton ansteigende, vorzugsweise nichtlineare, Federcharakteristik aufweist.

4. Vorrichtung nach Anspruch 1, dadurch gekennzeichnet, daß die Andruckplatte (4) ebenfalls eine elastische Oberfläche aufweist.

## Claims

1. Apparatus for the bounce-free lowering of a print head onto and its bounce-free landing on a record carrier (3), supported by a platen (4), for the linewise recording of information, comprising a lever (5) tiltable about an axis (7), characterized in that the tiltable lever (5) in the direction of the print line is arranged to precede the start of said line, its axis (7), extending transversely to the direction of the print line, being tiltable in the direction of the record carrier (3), the tiltable lever (5) being additionally provided on its top side with a ramp (6) sloping in the direction of the print line and constituting an inclined plane, that the print head (1) at least on one of its side faces is provided with a sliding shoe (10), by means of which, during the tilting motion of lever (5), the print head (1), supported on said lever, slides along ramp (6) until it touches the print line, and that an elastically deformable element (13), clamped between a stationary platen (12) and an arm (11) of the tiltable lever (5), damps the tilting motion of said tiltable lever in the direction of the record carrier (3).

2. Apparatus according to claim 1, characterized in that the response characteristics of a release magnet triggering the lowering of the print head (1) onto and its landing on the ramp (6) are chosen such that the air gap of the magnetic circuit of the release magnet is closed smoothly.

3. Apparatus according to claim 1, characterized in that the flexible element (13) has a monotone increasing, preferably, nonlinear, spring characteristic.

4. Apparatus according to claim 1, characterized in that the platen (4) also has a resilient surface.

## Revendications

1.- Dispositif pour l'abaissement et la pose sans rebondissement d'une tête d'impression sur un support d'enregistrement (3) guidé sur une plaque d'appui (4), pour l'enregistrement d'informations ligne par ligne, comprenant un levier basculant (5) qui peut basculer autour d'un axe de basculement (7), caractérisé en ce que le levier basculant (5) est disposé, en regardant dans la direction des lignes d'impression, avant le début de la ligne d'impression et peut basculer avec son axe de basculement (7) qui s'étend perpendiculairement à la direction de la ligne d'impression, en direction du support d'enregistrement (3), le levier basculant (5) présentant en outre sur sa face supérieure, une rampe (6) qui est en pente descendante dans la direction de la ligne d'impression, et qui représente un plan incliné, en ce que la tête d'impression (1) possède, sur au moins une face latérale, un patin de glissement (10) (avec lequel la tête d'impression (1) posée sur le levier basculant (5) glisse le long de la rampe (6) simultanément avec le mouvement de basculement de ce levier, jusqu'à ce qu'elle se pose sur la ligne d'impression), et en ce que, entre une butée fixe (8) et un bras (11) du levier d'impression (5), est serré un élément élastiquement déformable (13) qui amortit le mouvement de basculement du levier basculant vers le support d'enregistrement (3).

2.- Dispositif selon la revendication 1, caractérisé en ce que la caractéristique de réponse d'un électro-aimant de déclenchement qui déclenche l'abaissement et la pose d'une tête d'impression (1) sur la rampe (6) est choisie de manière que l'entrefer du circuit magnétique de l'électro-aimant de déclenchement se ferme doucement.

3.- Dispositif selon la revendication 1, caractérisé en ce que l'élément élastique (13) possède une caractéristique élastique à croissance monotone, de préférence non linéaire.

4.- Dispositif selon la revendication 1, caractérisé en ce que la plaque d'appui (4) présente également une surface élastique.

8

6 10 1

5

2

3

4

**FIG. 1**

7

8

6

10

5

9

2 3

4

7

**FIG. 2**

FIG.3

FIG.4

FIG. 5

FIG. 6

KRAFT

+

22

WEG

23a
23b
23c

16c

16a
16b

−

FIG. 7

KOPFBEWEGUNG

6

24

25a    25b    25c

WEG

FIG. 8